Europäisches Patentamt

(19) European Patent Office    (11) Publication number: **0 268 695**
**B1**
Office européen des brevets

(12)    **EUROPEAN PATENT SPECIFICATION**

(45) Date of publication of the patent specification:     (51) Int. Cl.⁴: **B29C 47/06,** B32B 3/26,
**31.01.90**                                                                    B32B 31/30

(21) Application number: **86116226.1**

(22) Date of filing: **22.11.86**

(54) Tubular, multi-layer film and method of manufacture.

(43) Date of publication of application:
**01.06.88 Bulletin 88/22**

(45) Publication of the grant of the patent:
**31.01.90 Bulletin 90/5**

(84) Designated Contracting States:
**BE DE FR GB IT NL SE**

(56) References cited:
EP-A- 0 032 027
GB-A- 1 436 907
US-A- 3 266 092

(73) Proprietor: **THE DOW CHEMICAL COMPANY, 2030 Dow
Center Abbott Road P.O. Box 1967, Midland
Michigan 48640-1967(US)**

(72) Inventor: **Luecke, Robert A., 5, North 33rd Street,
Newark Ohio 43055(US)**
Inventor: **Gould, Gordon E., 2201 Sharon Valley Road,
Newark Ohio 43055(US)**

(74) Representative: **Sternagel, Hans-Günther, Dr. et al,
Patentanwälte Dr. Michael Hann Dr. H.-G. Sternagel
Sander Aue 30, D-5060 Bergisch Gladbach 2(DE)**

ACTORUM AG

## Description

The present invention relates to a multi-layer tubular film and a method of making the film by extrusion. More particularly, the present invention relates to a multiple-layer composite film in which a central or core layer provides a substantially uniform, relatively low oxygen transmission rate therethrough over the entire peripheral surface of the film, including the weld line produced during extrusion of the film.

Film structures which include a polyvinylidene chloride layer have, in the past, been difficult to extrude into a tubular form. Extrusion of polyvinylidene chloride resins, such as Saran®, presents special problems due to the thermal degradation of the polymer which can occur in the extrusion die. It has been found, however, that by using a multi-component feedblock in which the polyvinylidene chloride resin is in the center of the feedblock, the resin in the center moves more quickly through the die than the resinous materials adjacent to the die walls, making extrusion of the resin in the center possible. The polyvinylidene chloride core is encapsulated by a thermally stable synthetic resinous material, such as polyethylene. When the resin is extruded through the feedblock, the resulting extrudate includes a central or core layer of the polyvinylidene chloride resin.

A problem in forming an encapsulated polyvinylidene chloride resin into a tubular film by extrusion resides in the production of a seam produced during the extrusion process. This seam extends longitudinally along a weld line of the tubular extrusion. Generally, an extrusion die used to produce a tubular extrusion defines an annular chamber into which a synthetic resinous material is forced. The resinous material divides into two substreams which flow in opposite directions around the annular chamber, meeting on the opposite side of the chamber where they recombine. The streams then exit from the annular chamber through an annular opening and, at the point of recombination, define the weld line.

It will be appreciated that if a feedblock having a core of a polyvinylidene chloride resin and outer, encapsulating polyethylene layers were to be extruded in this fashion, the polyvinylidene chloride core layer would not recombine along the weld line. Instead, only the encapsulating resinous material would recombine at the weld line. Since a polyethylene layer permits a much higher level of gas transmission therethrough as compared to a layer of polyvinylidene chloride of the same thickness, a tubular composite film having non-uniform gas transmission properties is produced. This is particularly undesirable where the film is to be used for the containment of a gas-sensitive material. For example, if the tubular film having a gap in the polyvinylidene chloride layer along its weld line were to be utilized for meat storage, the shelf life of the product would be shortened due to the transmission of oxygen through the gap in the barrier layer. It will be appreciated that a film having areas of high gas transmission would be unacceptable for this and many other applications.

One solution to this problem, as suggested by U.S. Patent No. 4,042,661, issued August 16, 1977 to Cook, is to extrude coaxially two multi-layer tubular film structures, with the weld lines of the two film structures spaced from each other around the periphery of the final tubular film. While providing a solution to the problem discussed above, Cook requires several polyvinylidene chloride core layers. Thus, the structure would be very complicated and difficult to manufacture. For a given film thickness, the individual layers would become too thin to extrude where a plurality of multi-layer film structures are employed.

Accordingly, there is a need for a composite film having a core layer which, in tubular form, provides a generally uniform barrier to oxygen transmission therethrough around its periphery and which is simple in construction.

Since the film of the invention does not have a seam as would occur by an overlapping of the layers, the integrity of the film is strong. The film has a uniform thickness over its entire circumferential extend and is therefore more easily flattened and rolled-up. A film with a thicker seam is not readily rolled up since the superimposed seams form a bulge in the rolled up film which tends to become more pronounced the more turns of the film are wound on to a roll. Any recurring deformity in a film therefore has a tendency to build up as the film is rolled up, eventually causing a creasing, misalignment, and tearing of the film.

Any non-uniformities in the film of the invention are randomized so that such non-uniformities can not cause excessive bulging as the film is rolled up. The term "randomizing" herein refers to a distribution of non-uniformities of the film over the surface of the roll as the film is rolled up.

Since there is no bonding or welding of the film of the invention, the film has a uniform strength and a uniform thickness.

Generally, the tubular, multi-layer film of the present invention comprises a central barrier layer, an adhesive layer on each side of the barrier layer, and inner and outer surface or skin layers. The adhesive layers completely cover the central barrier layer. Opposing edges of the central barrier layer have thinner edge portions which overlap by a substantial amount along a weld line such that the barrier layer has a uniform thickness providing a substantially uniform gas transmission barrier at all points over the entire peripheral surface of the tubular film. The inner and outer adhesive layers extend completely around the interior and the exterior of the core layer to protect the barrier layer from thermal degradation.

The inner and outer skin layers of the film are made of a synthetic resinous material such as, for example, polyethylene, polypropylene, and the like. The total thickness of the film is in the range of from 20 to 150 micrometer and, preferably about 50 micrometer. The central barrier layer has a thickness of from 3.5 to 15 micrometer, preferably about 6 micrometer. The inner and outer adhesive layers each have a thickness of from 3.5 to 11.5 micrometer and, like the barrier layer, preferably have a thickness of about 6 micrometer. The inner and outer skin layers are substantially equal in thickness and together make up the remaining thickness of the film. The central barrier layer overlaps by approximately 15 mm along the weld line, which is sufficient such that the oxygen transmission rate of the tubular film adjacent the weld line is no greater than the oxygen transmission rate through other portions of the tubular film.

The invention particularly resides in a tubular, multi-layer, composite film, comprising a central gas and vapor barrier core layer of a synthetic resinous material having opposing edges, inner and outer adhesive layers of a synthetic resinous material adhered to opposite sides of said central barrier layer, and inner and outer skin layers of a synthetic resinous material adhered to said inner and outer adhesive layers respectively, wherein the layers of said composite film are coextruded, and wherein the opposing edges of said core layer are in an overlapping relationship with each other along a weld line which extends longitudinally along said tubular film such that the core layer provides a substantially uniform barrier to the transmission of gas and vapor over the entire surface of said composite film.

The invention also resides in a method of making a tubular, multi-layer film comprising the steps of:

a) extruding a core layer of a polymeric barrier material having opposing edges and inner and outer adhesive layers covering said core layer into a first stream, said first stream having a generally annular cross-section of uniform thickness, the edges of said core layer having edge portion of a lesser thickness than the remaining portion of said core layer, said edge portions being in an overlapping relationship along a weld line;

b) extruding a second stream of a polymeric material having a generally annular cross-section, the second stream being positioned within the first stream and joined thereto by the inner adhesive layer; and

c) extruding a third stream of a polymeric material having a generally annular cross-section, the third stream surrounding the first stream and being joined thereto by the outer adhesive layer.

The step of extruding the tubular central barrier or core layer includes the step of extruding the first stream such that the thinner edge portions of the core layer overlap each other by about 1.5 cm when the core layer has a thickness of about 6 micrometer whereby the core layer is of substantial uniform thickness and provides a generally uniform barrier to the passage of gases and vapors, e.g. air or oxygen, therethrough around its entire peripheral surface.

Accordingly, the present invention provides a multi-layer tubular extrudate having a central or core layer which acts as a barrier layer to limit the transmission of gas or vapor therethrough, and in which the extrudate has gas transmission properties in the region of the weld line equivalent to those found in other regions of the extrudate.

These and other objects and other advantages of the invention will become apparent from the following detailed description, the accompanying drawings, and the appended claims.

Figure 1 is a sectional view of a multi-layer tubular extrudate of the present invention, with the individual layer thicknesses greatly exaggerated for purposes of illustration; and

Figure 2 is a partial sectional view, greatly enlarged, of the extrudate in the region of the weld line.

The tubular film of the invention comprises a central barrier layer 10 and an adhesive layer 12 and 14 adhered to opposite surfaces of the central barrier layer 10. The barrier layer 10 is made of a synthetic polymeric material, preferably a polyvinylidene chloride resin, such as Saran®, made by The Dow Chemical Company. The material employed in the adhesive layers 12 and 14 comprise any one of a number of well known polymeric resinous materials such as, for example, ethyl vinyl acetate or copolymers of ethylene and ethylenically unsaturated carboxylic acid, such as ethylene acrylic acid. The adhesive layers 12 and 14 completely cover the opposite surfaces of the central barrier layer 10.

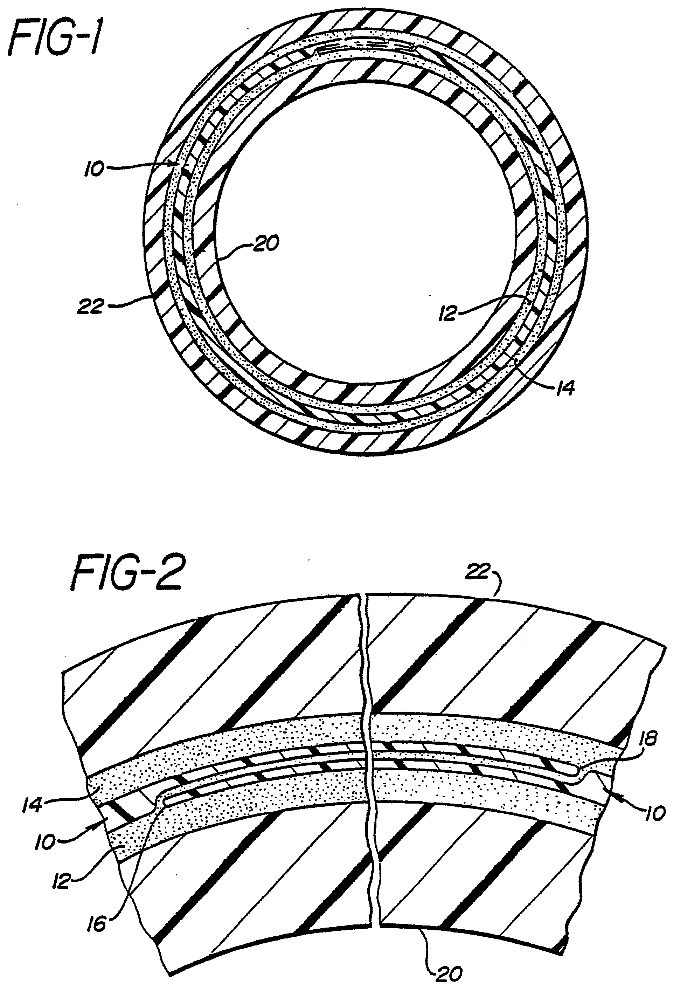

As best seen in Figure 2, the opposing edge portions 16 and 18 of the central barrier layer 10 overlap each other along the weld line. By virtue of this overlapping configuration, the central barrier layer 10 exhibits a substantially uniform oxygen transmission rate at all points along its periphery.

The multi-layer film further includes inner and outer surface or skin layers 20 and 22, respectively. The inner layer 20 extends completely around the interior surface of the tubular, multi-layer composite film, and the outer layer 22 extends completely around the exterior surface of the tubular, multi-layer composite film. The skin layers 20 and 22 preferably are formed of a synthetic polymeric material such as, for example, polyethylene, polypropylene, and the like. When the central core layer is made of a high barrier material such as Saran®, it is generally known that the Saran® deteriorates as a result of exposure to an elevated temperature during extrusion from an extrusion die. Accordingly, the adhesive layers 12 and 14 protect the central barrier layer 10 from degradation.

The tubular multi-layer film of the present invention is formed by coextrusion. A co-extrusion die, such as is shown in U.S. Patent No. 4,365,949 is generally used to co-extrude three laminate layers simultaneously. Streams of a polymeric material are supplied to the die to extrude inner and outer layers 20 and 22, respectively. An inlet opening of the die is in communication with a central extrusion passage which is supplied with a stream of polyvinylidene chloride which is completely encapsulated by an adhesive layer of a polymeric material. This polyvinylidene chloride/polymeric adhesive composite is extruded into a stream having a generally annular cross-section. The central extrusion passage is shaped to ensure that there is an overlap of the polyvinylidene chloride layer along a weld line as depicted in Figure 2. This overlap produces an oxygen transmission level in the region of the weld line which is comparable to that provided by the polyvinylidene chloride layer in other areas of the tubular, multi-layer film.

For a polyvinylidene chloride layer having a thickness of approximately 6 micrometer, the overlap required is approximately 1.5 cm. The adhesive layers 12 and 14 not only bond the polyvinylidene chloride central barrier layer 10 together in an overlapping fashion at overlapping edge portions 16 and 18, but they also join inner layer 20, extruded as a second extrusion stream, and outer layer 22, extruded as a third extrusion stream, to the central barrier layer 10.

While the methods and compositions herein described constitute preferred embodiments of the invention, it is to be understood that the invention is not limted to these precise methods and compositions, and that changes may be made in either without departing from the scope of the invention, which is defined in the appended claims.

## Claims

1. A tubular, multi-layer, composite film, comprising a central gas and vapor barrier core layer (10) of a synthetic resinous material having opposing edges (16, 18), inner and outer adhesive layers (12, 14) of a synthetic resinous material adhered to opposite sides of said central barrier layer, and inner and outer skin layers (20, 22) of a synthetic resinous material adhered to said inner and outer adhesive layers, respectively, wherein the layers of said composite film are coextruded, and wherein the opposing edges (16, 18) of said central barrier layer are in an overlapping relationship with each other along a weld line which extends longitudinally along said tubular film such that the central layer (10) provides a substantially uniform barrier to the transmission of gas and vapor over the entire surface of said composite film.

2. The tubular film of Claim 1 wherein said central barrier layer (10) has a thickness of from 3.5 to 15 micrometer, said inner and outer adhesive layers (12, 14) each have a thickness of from 3.5 to 11.5 micrometer, and wherein the total thickness of the film is in the range of from 20 to 150 micrometer.

3. The tubular film of Claim 2 in which the edge portions (16, 18) of said central barrier layer (10) overlaps by about 1.5 cm along said weld line.

4. The tubular film of any one of the preceding claims in which said central barrier layer (10) comprises polyvinylidene chloride.

5. The tubular film of any one of the preceding claims in which said inner and outer skin layers (20, 22) are selected from polyethylene and polypropylene.

6. The tubular film of Claim 2, wherein said adhesive layers (12, 14) are selected from copolymers of ethylene and vinyl acetate and copolymers of ethylene and ethylenically unsaturated carboxylic acid.

7. The tubular film of Claim 2 in which said central barrier layer (10) and said adhesive layers (12, 14) each have a thickness of about 6 micrometer.

8. A method of making a tubular, multi-layer film comprising the steps of:

a) extruding a core layer of a polymeric barrier material having opposing edges and inner and outer adhesive layers covering said core layer into a first stream said first stream having a generally annular cross-section of uniform thickness, the edges of said core layer having edge portion of a lesser thickness than the remaining portion of said core layer, said edge portions being in an overlapping relationship along a weld line;

b) extruding a second stream of a polymeric material having a generally annular cross-section, the second stream being positioned within the first stream and joined thereto by the inner adhesive layer; and

c) extruding a third stream of a polymeric material having a generally annular cross-section, the third stream surrounding the first stream and being joined thereto by the outer adhesive layer.

## Patentansprüche

1. Rohrförmige, mehrschichtige Verbundfolie enthaltend eine zentrale Gas- und Dampfsperrkernschicht (10) aus synthetischem, harzartigen Material mit einander gegenüberliegenden Rändern (16, 18), innere und äußere Klebstoffschichten (12, 14) aus synthetischem, harzartigen Material auf den einander gegenüberliegenden Seiten der zentralen Sperrschicht und innere und äußere Außenschichten (20, 22) aus synthetischem, harzartigen Material. die an den inneren und äußeren Klebstoffschichten haften. wobei die Schichten der Verbundfolie coextrudiert werden und wobei sich die einander gegenüberliegenden Ränder (16, 18) der zentralen Sperrschicht (10) längs einer sich in Längsrichtung der rohrförmigen Folie erstreckenden Schweißlinie überlappen, so daß die zentrale Schicht (10) eine im wesentlichen gleichmäßige Sperre für den Durchgang von Gas und Dampf auf der gesamten Oberfläche der Verbundfolie ergibt.

2. Rohrförmige Verbundfolie nach Anspruch 1, dadurch gekennzeichnet, daß die zentrale Sperrschicht (10) eine Dicke von 3,5 bis 15 μm aufweist, die inneren und äußeren Klebstoffschichten (12, 14) jeweils von 3,5 bis 11,5 μm dick sind und die Gesamtdicke der Folie im Bereich von 20 bis 150 μm beträgt.

3. Rohrförmige Verbundfolie nach Anspruch 2, dadurch gekennzeichnet, daß sich die Randteile (16, 18) der zentralen Sperrschicht (10) entlang der Schweißlinie etwa 1,5 cm überlappen.

4. Rohrförmige Verbundfolie nach jedem der vorstehenden Ansprüche, dadurch gekennzeichnet, daß die zentrale Sperrschicht (10) Polyvinylidenchlorid enthält.

5. Rohrförmige Verbundfolie nach jedem der vorstehenden Ansprüche, dadurch gekennzeichnet, daß die inneren und äußeren Außenschichten (20, 22) aus Polyethylen und Polypropylen ausgewählt sind.

6. Rohrförmige Verbundfolie nach Anspruch 2, dadurch gekennzeichnet, daß die Klebstoffschichten (12, 14) aus Copolymeren von Ethylen mit Vinylacetat und Copolymeren von Ethylen mit enthylenisch ungesättigter Carbonsäure ausgewählt sind.

7. Rohrförmige Verbundfolie nach Anspruch 2, dadurch gekennzeichnet, daß die zentrale Sperrschicht (10) und die Klebstoffschichten (12, 14) jeweils etwa 6 µm dick sind.

8. Verfahren zum Herstellen einer rohrförmigen, mehrschichtigen Verbundfolie mit den Schritten

a) Extrudieren einer Kernschicht aus polymerem Sperrmaterial, die einander gegenüberliegende Ränder aufweist und innere und äußere Klebstoffschichten, die die Kernschicht bedecken in einem ersten Strom, wobei dieser erste Strom einen im allgemeinen ringförmigen Querschnitt mit gleichmäßiger Dicke aufweist und die Ränder der Kernschicht Randteile geringerer Dicke aufweisen als der übrige Teil der Kernschicht und sich die Randteile entlang einer Schweißlinie überlappen,

b) Extrudieren eines zweiten Stromes von Polymermaterial mit im allgemeinen ringförmigem Querschnitt, wobei der zweite Strom innerhalb des ersten Stromes angeordnet und mit der inneren Klebstoffschicht verbunden wird, und

c) Extrudieren eines dritten Stromes von Polymermaterial mit einem im allgemeinen ringförmigen Querschnitt, wobei der dritte Strom den ersten Strom umgibt und mit der äußeren Klebstoffschicht verbunden wird.

**Revendications**

1. Film composite tubulaire, multicouche, comportant une couche-noyau centrale (10), formant barrière aux gaz et aux vapeurs, en un matériau synthétique résineux à bords opposés (16, 18), des couches adhésives, intérieure et extérieure (12, 14), d'un matériau synthétique résineux adhérent aux côtés opposés de ladite couche centrale formant barrière, ainsi que des couches de peau intérieure et extérieure (20, 22) d'un matériau synthétique résineux adhérent auxdites couches adhésives intérieure et extérieure, respectivement, dans lequel les couches dudit film composite sont coextrudées et dans lequel les bords opposés (16, 18) de ladite couche centrale formant barrière (10) viennent à recouvrement l'un sur l'autre le long d'une ligne de joint qui s'étend longitudinalement le long dudit film tubulaire de sorte que la couche centrale (10) fournit une barrière sensiblement uniforme à la transmission des gaz et des vapeurs sur toute la surface dudit film composite.

2. Film composite selon la revendication 1, dans lequel ladite couche centrale formant barrière (10) a une épaisseur allant de 3,5 à 15 microns, dans lequel lesdites couches adhésives intérieure et extérieure (12, 14) ont chacune une épaisseur allant de 3,5 à 11,5 microns, et dans lequel l'épaisseur totale du film est sur la plage allant de 20 à 150 microns.

3. Film tubulaire selon la revendication 2, dans lequel les portions de bordure (16, 18) de ladite couche centrale formant barrière (10) viennent à recouvrement sur environ 1,5 cm le long de ladite ligne de soudure.

4. Film tubulaire selon l'une quelconque des revendications précédentes, dans lequel ladite couche centrale formant barrière (10) est constituée de chlorure de polyvinylidène.

5. Film tubulaire selon l'une quelconque des revendications précédentes, dans lequel lesdites couches de peau, intérieure et extérieure (20, 22), sont choisies parmi le polyéthylène et le polypropylène.

6. Film tubulaire selon la revendication 2, dans lequel lesdites couches adhésives (12, 14) sont choisies parmi les copolymères de l'éthylène et de l'acétate de vinyle et les copolymères de l'éthylène et d'un acide carboxylique insaturé à liaison éthylénique.

7. Film tubulaire selon la revendiation 2, dans lequel ladite couche centrale formant barrière (10) et lesdites couches adhésives (12, 14) ont chacune une épaisseur d'environ 6 microns.

8. Procédé de fabrication d'un film tubulaire multicouche comportant les étapes consistant à:

a) extruder une couche-noyau d'un matériau polymère formant barrière aux côtés opposés et des couches adhésives, intérieure et extérieure, recouvrant ladite couche-noyau dans un premier flux, ledit premier flux ayant une section droite de forme générale annulaire d'épaisseur uniforme, les bords de ladite couche-noyau ayant une portion de bordure d'épaisseur inférieure à la portion restante de ladite couche-noyau, lesdites portions de bordure venant en recouvrement le long d'une ligne de soudure;

b) extruder un second flux de matériau polymère ayant une section droite de forme générale annulaire, le second flux étant positionné à l'intérieur du premier flux et réuni à lui par la couche adhésives intérieure; et

c) extruder un troisième flux d'un matériau polymère ayant une section droite de forme générale annulaire, le troisième flux entourant le premier flux et étant réuni à lui par la couche adhésive extérieure.

FIG-1

FIG-2